# EUROPÄISCHE PATENTSCHRIFT

(11) **EP 3 728 865 B1**
(45) Veröffentlichungstag und Bekanntmachung des Hinweises auf die Patenterteilung: **12.05.2021**
(21) Anmeldenummer: 18783374.4
(22) Anmeldetag: 24.09.2018
(51) Int. Cl.: F15B 11/12

(54) **KOLBEN-ZYLINDER-ANORDNUNG**
PISTON-CYLINDER ASSEMBLY
ENSEMBLE PISTON-CYLINDRE

(30) Priorität: 21.12.2017 DE 102017011895
(43) Veröffentlichungstag der Anmeldung: 28.10.2020
(73) Patentinhaber: WABCO GmbH, 30453 Hannover (DE)
(72) Erfinder: KARSTENS, Hauke, 24111 Kiel (DE); REIMANN, Dennis, 30657 Hannover (DE)
(74) Vertreter: Rabe, Dirk-Heinrich
(86) Internationale Anmeldenummer: PCT/EP2018/075748
(87) Internationale Veröffentlichungsnummer: WO 2019/120653

(56) Entgegenhaltungen:
- WO-A1-2017/050356
- DE-A1- 4 038 170
- GB-A- 1 142 506

## Beschreibung

Die Erfindung betrifft eine durch Druckbeaufschlagung mittels eines Fluids betätigbare Kolben-Zylinder-Anordnung, welche beispielsweise als Getriebeaktuator mit drei Schaltstellungen zur Schaltbetätigung eines automatischen Schaltgetriebes genutzt werden kann.

Eine derartige Kolben-Zylinder-Anordnung weist üblicherweise einen in einem Zylindergehäuse axial verschiebbar aufgenommenen, doppelt wirksamen Hauptkolben auf, welcher mit Hilfe zweier Schleppkolben durch Befüllen und Entleeren von zwei axial gegenüberliegenden Druckräumen zwischen zwei Endpositionen und einer Mittenposition verschiebbar ist. Dazu können die Schleppkolben den Hauptkolben jeweils in einer Axialrichtung bis zu einer axial mittigen, ortsfesten Stellwegbegrenzung mitnehmen. Wird beispielsweise der erste Druckraum mit einem Druckfluid befüllt und der zweite Druckraum entleert, fährt der Hauptkolben eine der beiden Endpositionen an, wobei der ebenfalls druckbeaufschlagte Schleppkolben an der Stellwegbegrenzung stehen bleibt und der Hauptkolben unter Mitnahme des anderen Schleppkolbens bis zu einem Endanschlag im Zylindergehäuse weiter bewegt wird. Entsprechendes gilt für die entgegengesetzte Axialrichtung. Durch Druckbeaufschlagung beider Druckräume fährt der Hauptkolben die Mittenposition an und kann in dieser Position im Kräftegleichgewicht festgehalten werden. Die beiden Schleppkolben sind üblicherweise radial außen auf dem Hauptkolben axial verschiebbar geführt. Zur Mitnahme des Hauptkolbens durch die Schleppkolben ist an dem Hauptkolben eine ringstegförmige Erhebung angeordnet oder ausgebildet, die sich nach radial außen erstreckt, und mittels der die beiden Schleppkolben axial voneinander getrennt sind. Die beiden Schleppkolben weisen jeweils einen zur Kolbenerhebung hinzeigenden Schubabschnitt auf. Der Kolbensteg wirkt zur Mitnahme des Hauptkolbens in der jeweiligen axialen Stellrichtung mit dem Schubabschnitt des jeweiligen Schleppkolbens zusammen.

Eine derartige, aus der nicht vorveröffentlichten DE 10 2017 003 017.0 bekannte Kolben-Zylinder-Anordnung 1.1 ist in der Fig. 4 dargestellt. Diese bekannte Kolben-Zylinder-Anordnung 1.1 dient zur Schaltbetätigung eines automatisierten Schaltgetriebes. Sie weist einen dort als Schaltkolben ausgebildeten Hauptkolben 2.1 auf, welcher in einem als Schaltzylinder ausgebildeten Zylindergehäuse 3 koaxial zur Längsachse 4 der Kolben-Zylinder-Anordnung 1.1 gleitend beweglich angeordnet ist. Der Hauptkolben 2.1 bewegt sich in einer Kolbenkammer 7 des Zylindergehäuses 3 zwischen einer ersten Endanschlagfläche 5 und einer zweiten Endanschlagfläche 6, wobei der Hauptkolben 2.1 die Kolbenkammer 7 in zwei hinsichtlich ihres Volumens variable, mit Druckluft beaufschlagbare Druckräume 8, 9 unterteilt, die gegeneinander abgedichtet sind.

Die beiden Druckräume 8, 9 der Kolbenkammer 7 sind an eine Ventileinheit angeschlossen, die ein erstes 3/2-Wege-Magnetventil 15 aufweist, welches über eine erste pneumatische Verbindungsleitung 16 mit dem ersten Druckraum 8 verbunden ist. Ein zweites 3/2-Wege-Magnetventil 17 ist über eine zweite pneumatische Verbindungsleitung 18 mit dem zweiten Druckraum 9 verbunden. Die beiden Druckräume 8, 9 sind mit einer nicht dargestellten Druckluftversorgung verbindbar. Zur Entlüftung an die Umgebung sind die Druckräume 8, 9 beziehungsweise die Kolbenkammer 7 mit einer ebenfalls nicht dargestellten Entlüftungsleitung verbindbar.

Der Hauptkolben 2.1 weist axial mittig einen kreisförmigen, sich nach radial außen erstreckenden Kolbensteg 10.1 auf, der zwei weitgehend hohlzylindrische Schleppkolben 11.1, 12.1 axial voneinander trennt. Die beiden Schleppkolben 11.1, 12.1 sind auf der zweiteiligen, zylindrischen Außenmantelfläche des Hauptkolbens 2.1 axial verschiebbar aufgenommen, wobei der erste Schleppkolben 11.1 im ersten Druckraum 8 und der zweite Schleppkolben 12.1 im zweiten Druckraum 9 angeordnet ist. Zur Dämpfung eines Endanschlags der drei Kolben 2.1, 11.1, 12.1 im Zylindergehäuse 3 an den Endanschlagsflächen 5, 6 ist an den beiden Schleppkolben 11.1, 12.1 stirnseitig jeweils ein als Gummipuffer ausgebildetes mechanische Dämpfungselement 21, 22 befestigt.

An dem Hauptkolben 2.1 ist eine Kolbenstange 19 befestigt, welche in dem Zylindergehäuse 3 gleitend gelagert ist und axial aus dem Zylindergehäuse 3 herausragt. Die Verbindung zwischen dem Hauptkolben 2.1 und der Kolbenstange 19 ist durch eine Schraubverbindung 20 hergestellt. Die Kolbenstange 19 ist in bekannter Weise mit einem Schaltelement einer Schaltkupplung, beispielsweise einer Schaltgabel oder einer Schiebemuffe, im Eingriff oder mit diesen wirkverbunden.

Zur Abdichtung der beiden Druckräume 8, 9 sind zunächst eine erste und eine zweite ringförmige Dichtung 23, 24 radial zwischen dem Hauptkolben 2.1 und jeweils einem der beiden Schleppkolben 11.1, 12.1 angeordnet. Außerdem sind ein dritte und eine vierte ringförmige Dichtung 25, 26 radial jeweils zwischen den beiden Schleppkolben 11.1, 12.1 und der zugeordneten zylindrischen Innenmantelfläche des Zylindergehäuses 3 angeordnet. Schließlich sei auf eine fünfte ringförmige Dichtung 27 hingewiesen, welche radial zwischen der Kolbenstange 19 und dem Zylindergehäuse 3 angeordnet ist und der kolbenstangenseitigen Abdichtung des ersten Druckraumes 8 dient.

Der Kolbensteg 10.1 des Hauptkolbens 2.1 dient im Betrieb der Kolben-Zylinder-Anordnung 1.1 für die beiden Schleppkolben 11.1', 12.1 wechselweise als axiales Widerlager. Hierzu weisen die beiden Schleppkolben 11.1, 12.1 an deren kolbenstegnahen axialen Ende jeweils einen sich nach axial innen erstreckenden Schubabschnitt 13.1, 14.1 auf. Die beiden Schleppkolben 11.1, 12.1 sind außerdem durch eine gehäuseseitige, etwa mittig in der Kolbenkammer 7 angeordnete Stellwegbegrenzung 28.1 voneinander beabstandet, welche als ein ringförmiger Haltesteg von der Gehäusewand nach radial innen, hin zu dem Kolbensteg 10.1 ragt. Auf den Kolbensteg 10.1 ist ein Gleitring 29 aufgezogen, mittels dem der Hauptkolben 2.1 an der gehäusefesten Stellwegbegrenzung 28.1 axial verschiebbar gelagert ist. Die Stellwegbegrenzung 28.1 dient der beidseitigen axialen Wegbegrenzung im Stellweg der beiden Schleppkolben 11.1, 12.1, wobei die maximalen Stellwege der beiden Schleppkolben 11.1, 12.1 etwa gleich groß sind.

Bei einer Druckbeaufschlagung bilden die druckraumseitigen Stirnflächen vom Hauptkolben 2.1 und von jeweils einem der beiden Schleppkolben 11.1, 12.1 zusammen eine effektive Kolbenfläche, welche sich immer dann ändert, wenn der betreffende Schleppkolben 11.1, 12.1 an der Stellwegbegrenzung 28.1 stehen bleibt und der Hauptkolben 2.1 weiter fährt. Demzufolge lässt sich mittels der Schleppkolben 11.1, 12.1 die Stellgeschwindigkeit, mit der die Kolbenstange 19 axial verschoben werden kann, bei konstantem Betätigungsdruck in zwei Geschwindigkeitsstufen einstellen.

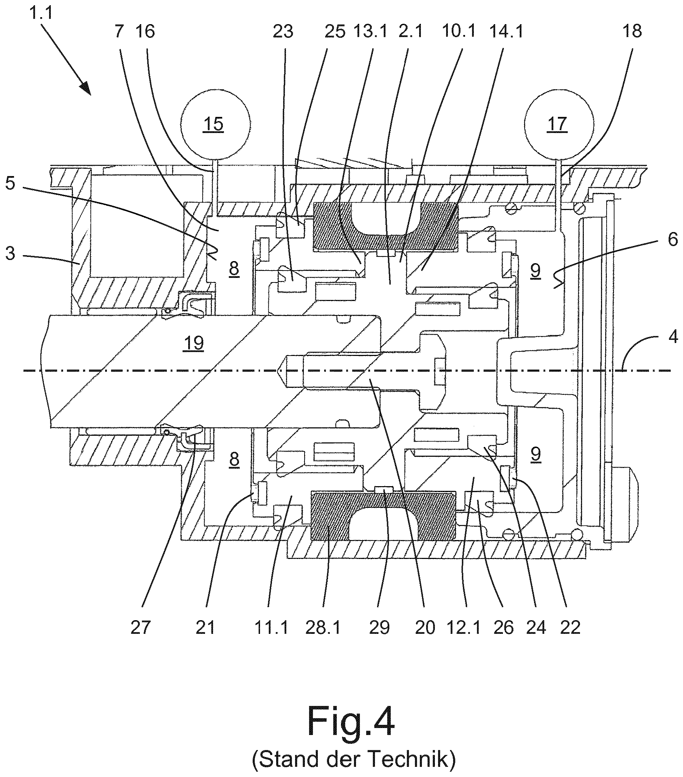

Zudem ist in Fig. 4 erkennbar, dass die axiale Gesamtlänge der bekannten Kolben-Zylinder-Anordnung 1.1 maßgeblich durch die Breite beziehungsweise die axiale Länge des Kolbenstegs 10.1 des Hauptkolbens 2.1 sowie durch die axialen Längen der beiden Schubabschnitte 13.1, 14.1 der Schleppkolben 11.1, 12.1 bestimmt ist, welche in der Mittenposition in Axialrichtung spielfrei hintereinander liegen. Andererseits ist der verfügbare Bauraum für Getriebesteller aufgrund von Konstruktions- und Designvorgaben der Fahrzeughersteller meistens eng begrenzt.

Die DE 40 38 170 A1 zeigt eine weitere Kolben-Zylinder-Anordnung in der Bauweise als Dreistellungsaktuator mit einem Hauptkolben und zwei Schleppkolben, bei der zur Stellwegbegrenzung der Schleppkolben in einer Mittenposition ein Haltesteg an einem Zylindergehäuse ausgebildet ist, und bei der an dem Hauptkolben ein Bund, Ring, Steg oder dergleichen für die Mitnahme des Hauptkolbens durch die Schleppkolben in die jeweilige Schaltstellung ausgebildet ist.

Vor diesem Hintergrund lag der Erfindung die Aufgabe zugrunde, eine Kolben-Zylinder-Anordnung der eingangs genannten Art vorzustellen, die eine besonders kompaktere Bauform aufweist. Insbesondere soll die Kolben-Zylinder-Anordnung eine kleinere axiale Gesamtlänge aufweisen als bisherige technische Lösungen. Die vorzustellende Kolben-Zylinder-Anordnung soll zudem als Getriebesteller für ein automatisiertes Schaltgetriebe im Antriebsstrang eines Fahrzeugs nutzbar sein.

Die Lösung dieser Aufgabe wird mit einer Kolben-Zylinder-Anordnung erreicht, welche die Merkmale des Anspruchs 1 aufweist. Vorteilhafte Ausgestaltungen und Weiterbildungen sind in den abhängigen Ansprüchen definiert.

Der Erfindung lag die Erkenntnis zugrunde, dass bei den bekannten Kolben-ZylinderAnordnungen in der Bauart des erläuterten Dreistellungsaktuators die radiale Erhebung des Hauptkolbens, gegen welche der wenigstens eine Schleppkolben fährt, eine geschlossene Fläche senkrecht zur Kolbenlängsachse aufweist. Der Schleppkolben weist ein Schubstück mit dem etwa gleichen Außendurchmesser wie die Kolbenerhebung auf. Die Kolbenerhebung und das Schleppkolbenschubstück liegen bei der Mitnahme des Hauptkolbens durch den Schleppkolben flächig aneinander an. Durch diese Anordnung von Kolbenerhebung und Schleppkolbenschubstück ergibt sich eine unnötig große axiale Länge der Kolben-Zylinder-Anordnung. Abhilfe hierfür kann geschaffen werden, wenn Hauptkolben und Schleppkolben raumsparend aneinander angepasst werden. Bei einer Anordnung mit zwei Schleppkolben konnte durch eine einfache konstruktive Maßnahme, welche es erlaubt, dass beidseitig die Schleppkolben abschnittweise axial in den Hauptkolben einfahren können, ohne sich gegenseitig zu behindern, eine Verringerung der axialen Länge der hintereinander aufgereihten Kolben von annähernd der doppelten Breite der Hauptkolbenerhebung erreicht werden. Somit kann die axiale Gesamtlänge einer derartigen Kolben-Zylinder-Anordnung erheblich verkürzt werden.

Die Erfindung geht daher aus von einer Kolben-Zylinder-Anordnung mit einem Zylindergehäuse, in dem ein Hauptkolben sowie mindestens ein Schleppkolben jeweils axial verschiebbar aufgenommen sind, wobei der Hauptkolben eine Kolbenkammer des Zylindergehäuses in zwei Druckräume mit veränderlichem Volumen unterteilt, über welche der Hauptkolben beidseitig und der Schleppkolben einseitig mit einem Druckfluid beaufschlagbar sind, bei welcher der wenigstens eine Schleppkolben axial verschiebbar auf einer zylindrischen Außenmantelfläche des Hauptkolbens geführt ist, welche sich seitlich eines als axiales Widerlager wirksamen kreisförmigen Kolbenstegs erstreckt, bei dem der Kolbensteg sich von der Außenmantelfläche des Hauptkolbens nach radial außen erstreckt, bei welcher der wenigstens eine Schleppkolben an seinem kolbenstegnahen Ende einen Schubabschnitt aufweist, der sich nach axial innen hin zu dem Kolbensteg erstreckt, bei der an dem Zylindergehäuse eine Stellwegbegrenzung zur Begrenzung eines axialen Stellwegs des wenigstens einen Schleppkolbens angeordnet oder ausgebildet ist, und bei welcher der wenigstens eine Schleppkolben bei einer Druckbeaufschlagung den Hauptkolben bis zum Anschlagen des Schleppkolbens an der Stellwegbegrenzung mittels des Schubabschnitts mitschleppt.

Zur Lösung der gestellten Aufgabe sieht die Erfindung vor, dass der Kolbensteg des Hauptkolbens eine axiale Ausnehmung aufweist, und dass der Schubabschnitt des wenigstens einen Schleppkolbens an diese Ausnehmung derartig geometrisch angepasst ausgebildet ist, dass der Schubabschnitt beim Anfahren des jeweiligen Schleppkolbens an den Kolbensteg des Hauptkolbens formschlüssig in die Ausnehmung eintauchen kann.

Demnach kann der Schubabschnitt des jeweiligen Schleppkolbens in dem Kolbensteg des Hauptkolbens aufgenommen werden und darin ein- und ausfahren. Dadurch ist die axiale Baulänge der Anordnung entsprechend verkürzt. Insbesondere kann die Kolbenkammer, in welcher Hauptkolben und Schleppkolben aufgenommen sind, gegenüber dem Stand der Technik axial verkleinert werden und damit das Zylindergehäuse insgesamt entsprechend kürzer konzipiert werden.

Gemäß einer ersten vorteilhaften Ausführungsform der Kolben-Zylinder-Anordnung gemäß der Erfindung kann vorgesehen sein, dass zwei Schleppkolben in dem Zylindergehäuse angeordnet sowie durch einen axial mittig an dem Hauptkolben angeordneten Kolbensteg voneinander getrennt sind, dass ein erster Schleppkolben, welcher einen ersten Schubabschnitt aufweist, in einem ersten Druckraum auf der zylindrischen Außenmantelfläche des Hauptkolbens axial beweglich geführt ist, dass ein zweiter Schleppkolben, welcher einen zweiten Schubabschnitt aufweist, in einem zweiten Druckraum auf der zylindrischen Außenmantelfläche des Hauptkolbens axial beweglich geführt ist, und dass der Kolbensteg zwei axiale Ausnehmungen aufweist, wobei eine erste Ausnehmung dem ersten Schleppkolben und eine zweite Ausnehmung dem zweiten Schleppkolben zugewandt ist, so dass jeder Schleppkolben beim Anfahren an den Kolbensteg in die zugeordnete Ausnehmung des Kolbenstegs eintauchen kann.

Demnach können bei einer Kolben-Zylinder-Anordnung mit einem Hauptkolben und zwei Schleppkolben beide Schleppkolben gleichzeitig in den Kolbensteg einfahren und sich dabei axial teilweise überlappen. Die axiale Gesamtlänge der Anordnung aus dem Hauptkolben und dem beiden Schleppkolben ergibt sich, wenn die Kolben-Zylinder-Anordnung beidseitig unter Druck steht und die Schleppkolben beidseitig am Kolbensteg des Hauptkolbens anliegen. Dadurch, dass beide Schleppkolben gleichzeitig abschnittweise in den Kolbensteg einfahren und sich dabei axial überlappen können, verkürzt sich die Gesamtlänge im Vergleich zu herkömmlichen Kolben-Zylinder-Anordnungen, bei denen die Stirnflächen von Kolbensteg und Schleppkolbenschubstück aneinander liegen deutlich, idealerweise um annähernd die doppelten Breite der radialen Hauptkolbenerhebung.

Ein axiales Überlappen der beiden Schleppkolbenschubabschnitte bei einem gleichzeitigen Anfahren beider Schleppkolben an den Hauptkolbensteg kann bei einer vorteilhaften Ausführungsform der Erfindung ermöglicht werden, indem die ersten und zweiten Schubabschnitte der ersten und zweiten Schleppkolben jeweils aus mehreren, in Umfangsrichtung zueinander beabstandeten, kreisbogenförmigen ersten und zweiten Schubsegmenten gebildet sind, wobei gegenüberliegende erste und zweite Schubsegmente der Schleppkolben in Umfangsrichtung in Bezug zueinander alternierend angeordnet sind, und indem die ersten und zweiten Ausnehmungen des Kolbenstegs jeweils aus mehreren in Umfangsrichtung zueinander beabstandeten taschenförmigen ersten und zweiten Ausnehmungssegmenten gebildet sind. Hierbei sind axial gegenüberliegende erste und zweite Ausnehmungssegmente des Kolbenstegs in Umfangsrichtung zueinander alternierend angeordnet, so dass jedem ersten Schubsegment ein erstes Ausnehmungssegment und jedem zweiten Schubsegment ein zweites Ausnehmungssegment zugeordnet ist, welche paarweise ineinandergreifen können.

Demnach sind an dem Kolbensteg des Hauptkolbens Taschen in wechselnden Abschnitten von beiden Stirnseiten ausgebildet. Die Schubabschnitte werden gegenüber dem Außendurchmesser des Kolbenstegs kürzer ausgeführt und den Taschen formschlüssig angepasst. Die Schleppkolben können dann mit ihren Schubsegmenten in diese Taschen hineinfahren. Die Stegbreite des Kolbenstegs, welche beispielsweise durch einen auf dem Außenmantel des Stegs ohnehin vorgesehenen Gleitring vorgegeben ist, kann somit für den Schleppvorgang effektiv genutzt werden. Durch eine Unterteilung der Taschen in einer zueinander umfangsbezogen alternierenden Ordnung können die Schleppkolben axial überlappend angeordnet sein. Dadurch baut die Kolben-Zylinder-Anordnung in der für die axiale Gesamtlänge maßgeblichen Mittenstellung bedeutend kürzer. Zudem können sich durch Materialeinsparung im Bereich der Ausnehmungen im Kolbensteg eine Gewichtsersparnis sowie eine Reduzierung der zu bewegenden Masse ergeben.

Außerdem kann vorgesehen sein, dass der erste Schubabschnitt des ersten Schleppkolbens einen ersten Absatz aufweist, dass der zweite Schubabschnitt des zweiten Schleppkolbens einen zweiten Absatz aufweist, dass diese Absätze in Umfangsrichtung geschlossen oder unterbrochen ausgebildet sind, wobei der erste Absatz als eine erste axiale Anschlagfläche zur Begrenzung des Stellwegs des ersten Schleppkolbens an der Stellwegbegrenzung in einer ersten Axialrichtung sowie zur gleichzeitigen Begrenzung der Eintauchtiefe in die erste Ausnehmung wirksam ist, und wobei der zweite Absatz als eine zweite axiale Anschlagfläche zur Begrenzung des Stellwegs des zweiten Schleppkolbens an der Stellwegbegrenzung in einer zweiten Axialrichtung sowie zur gleichzeitigen Begrenzung der Eintauchtiefe in die zweite Ausnehmung wirksam ist.

Weiter kann vorgesehen sein, dass die Stellwegbegrenzung für jeden Schleppkolben als doppelseitig wirksamer Haltesteg des Zylindergehäuses ausgebildet ist, welcher sich nach radial innen, hin zu dem Kolbensteg erstreckt. Durch diesen Haltesteg ist eine einfache, doppelseitige wirksame Stellwegbegrenzung geschaffen. Eine derartige Stellwegbegrenzung ist insbesondere für eine Anordnung mit zwei Schleppkolben vorteilhaft geeignet.

Alternativ dazu kann vorgesehen sein, dass die Stellwegbegrenzung für jeden Schleppkolben als einseitig wirksame Stufe an dem Zylindergehäuse ausgebildet ist, welche sich nach radial innen, hin zu dem Hauptkolben erstreckt. Eine derartige Stellwegbegrenzung ist für eine Anordnung mit ein oder zwei Schleppkolben geeignet. Die Stufen können axial zu dem Kolbensteg so angeordnet sein, dass ein Raum radial über dem Kolbensteg frei bleibt oder eingespart werden kann.

Gemäß einer anderen vorteilhaften Ausgestaltung der Erfindung kann vorgesehen sein, dass lediglich ein einziger Schleppkolben vorhanden ist, welcher einen Schubabschnitt aufweist sowie auf einem Hauptkolben geführt ist, dass dieser Hauptkolben einen sich radial erstreckenden Kolbensteg aufweist, welcher wenigstens eine axiale Ausnehmung aufweist, und dass der Kolbensteg axial endseitig an dem Hauptkolben ausgebildet ist.

Bei einer Anordnung mit nur einem Schleppkolben ist es vorteilhaft, wenn der Kolbensteg sich nicht von der axialen Mitte des Hauptkolbens radial erhebt, sondern an dessen von dem einzigen Schleppkolben entferntem Rand. Dadurch kann ein Aufbau geschaffen werden, bei dem der Schleppkolben mittels eines absatzförmigen Schubabschnitts in eine axiale Ausnehmung des Kolbenstegs eintauchen kann, wobei der abschnittweise eingetauchte Schleppkolben insgesamt axial nicht über den Kolbensteg hinausreicht. Dadurch wird eine besonders kompakte Bauform erreicht.

Bei einer vorteilhaften Weiterbildung dieser Ausführungsform kann vorgesehen sein, dass sich der Kolbensteg zumindest bis in die axiale Mitte des Hauptkolbens erstreckt, wobei die radiale Außenmantelfläche des Kolbenstegs eine Auflagefläche zur Anbringung eines Funktionselements, wie beispielsweise einer Positionserfassungsvorrichtung oder einer Positionsverriegelungsvorrichtung oder Teile davon, bildet. Demnach kann bei einem Dreistellungsaktuator, welcher mit nur einem Schleppkolben arbeitet, nicht nur die Gesamtlänge verringert werden, sofern der Schubabschnitt des Schleppkolbens in eine Ausnehmung des Hauptkolbenstegs eintauchen kann. Zusätzlich kann die bei dieser Ausführungsform relativ große Breite des radialen Kolbenstegs dazu genutzt werden, um funktionelle Elemente auf dessen Außenmantel innerhalb des Zylindergehäuses zu integrieren. Dies ist insbesondere dann möglich, wenn der Hauptkolben so gelagert und geführt angeordnet ist, dass auf einen axial mittigen Gleitring auf dem Kolbensteg, welcher den Hauptkolben gegenüber dem Zylindergehäuse zusätzlich abstützt, verzichtet werden kann. Ein solches Funktionselement kann beispielsweise ein Magnet sein, dessen Magnetfeld von einem radial beabstandeten Hallsensor detektiert wird, um die genaue axiale Position des Hauptkolbens und damit eines durch die Kolbenstange betätigten Schaltelements, wie beispielsweise einer Schiebemuffe eines Schaltgetriebes, zu detektieren.

Schließlich betrifft die Erfindung auch ein automatisiertes Schaltgetriebe eines Fahrzeugs, beispielsweise eines Nutzfahrzeugs, mit einer Kolben-Zylinder-Anordnung, welche als ein Dreistellungsaktuator ausgebildet ist und als ein Getriebesteller des Schaltgetriebes arbeiten kann, wobei diese Kolben-Zylinder-Anordnung die zuvor geschilderten Merkmale von wenigstens einem der Ansprüche aufweist.

Die Erfindung wird nachstehend anhand von zwei in der beigefügten Zeichnung dargestellten Ausführungsbeispielen näher erläutert. In der Zeichnung zeigt
Fig. 1 eine erste Ausführungsform einer Kolben-Zylinder-Anordnung mit den Merkmalen der Erfindung in einem schematischen axialen Längsschnitt,
Fig. 2 eine perspektivische Darstellung einer auseinandergezogenen Kolben-Baugruppe der Kolben-Zylinder-Anordnung gemäß Fig. 1,
Fig. 3 eine zweite Ausführungsform einer Kolben-Zylinder-Anordnung mit den Merkmalen der Erfindung in einem schematischen axialen Längsschnitt, und
Fig. 4 einen schematischen axialen Längsschnitt durch eine Kolben-Zylinder-Anordnung gemäß dem Stand der Technik.

Einige Bauelemente in den Figuren stimmen in ihrem Aufbau und/oder in ihrer Funktion überein, so dass sie zur Vereinfachung mit denselben Bezugsziffern bezeichnet sind.

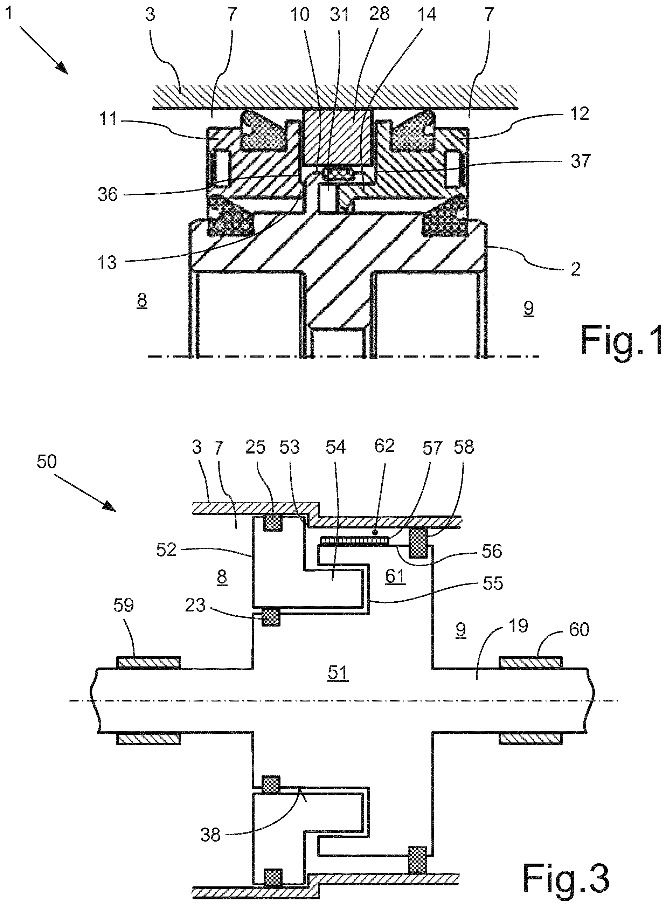

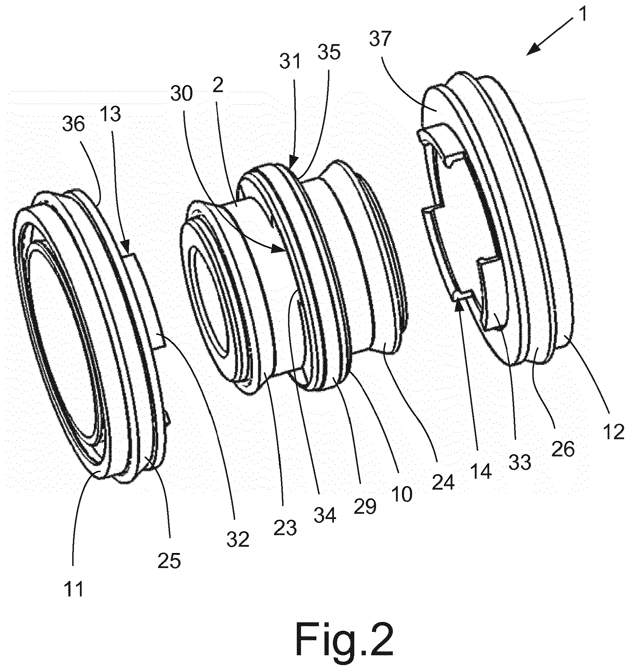

Die aus dem Stand der Technik bekannte Kolben-Zylinder-Anordnung 1.1, welche in Fig. 4 dargestellt ist, wurde bereits eingangs erläutert. Demgegenüber weist eine in Fig. 1 und Fig. 2 dargestellte erfindungsgemäße Kolben-Zylinder-Anordnung 1 einen Hauptkolben 2 sowie zwei Schleppkolben 11, 12 in einer Platz sparenden Anordnung auf. Dazu ist an dem Hauptkolben 2 ein kreisförmiger Kolbensteg 10 ausgebildet, welcher zwei sich gegenüberliegende kreisförmige axiale Ausnehmungen 30, 31 aufweist. Die erste Ausnehmung 30 ist zu dem ersten Schleppkolben 11 hin ausgerichtet offen, und die zweite Ausnehmung 31 ist zu dem zweiten Schleppkolben 12 hin ausgerichtet offen. An den beiden Schleppkolben 11, 12 sind jeweils zwei kreisförmige Schubabschnitte 13, 14 ausgebildet, welche den zwei Ausnehmungen 30, 31 in dem Hauptkolben 2 in ihrer geometrischen Form und Dimensionierung angepasst sind. Der erste Schleppkolben 11 weist demnach einen ersten Schubabschnitt 13 auf, der zu der ersten Ausnehmung 30 des Kolbenstegs 10 ausgerichtet ist. Der zweite Schleppkolben 12 weist einen zweiten Schubabschnitt 14 auf, der zu der zweiten Ausnehmung 31 des Kolbenstegs 10 ausgerichtet ist.

Die beiden Ausnehmungen 30, 31 des Kolbenstegs 10 sollen in dem gezeigten Ausführungsbeispiel sich auf gleichen radialen Durchmessern beidseitig des Kolbenstegs 10 axial gegenüberliegen. Daher sind die Ausnehmungen 30, 31 über den Umfang des Kolbenstegs 10 nicht durchgehend ausgebildet sondern in kreisbogenförmige Ausnehmungssegmente 34, 35 unterteilt, welche als Taschen ausgebildet sind und sich beidseitig abwechseln (Fig. 2). Demnach besteht die erste Ausnehmung 30 aus mehreren ersten Ausnehmungssegmenten 34, welche über den Umfang des Kolbenstegs 10 gleichmäßig beabstandet verteilt ausgebildet sind. Dementsprechend besteht auch die zweite Ausnehmung 31 aus mehreren zweiten Ausnehmungssegmenten 35, so dass die gegenüberliegenden ersten und zweiten Ausnehmungssegmente 34, 35 eine alternierende Reihe bilden.

Die Schubabschnitte 13, 14 der beiden Schleppkolben 11, 12 sind entsprechend passend segmentiert ausgebildet. Der erste Schubabschnitt 13 des ersten Schleppkolbens 11 besteht also aus mehreren kreisbogenförmigen ersten Schubsegmenten 32, und der zweite Schubabschnitt 14 des zweiten Schleppkolbens 12 besteht aus mehreren zweiten Schubsegmenten 33. Auf der einen axialen Seite des Kolbenstegs 10 ist somit jedem ersten Schubsegment 32 ein erstes Ausnehmungssegment 34 zugeordnet. Auf der anderen Seite des Kolbenstegs 10 ist jedem zweiten Schubsegment 33 ein zweites Ausnehmungssegment 35 zugeordnet, so dass die zugeordneten Schubsegment- und Ausnehmungssegmentpaare 32, 34; 33, 35 jeweils formschlüssig ineinandergreifen können.

Weiter ist an dem Zylindergehäuse 3 eine ortsfeste Stellwegbegrenzung 28 vorgesehen, welche als ein doppelseitig wirksamer Haltesteg ausgebildet ist und sich nach radial innen, hin zu dem Kolbensteg 10 erstreckt. Die Stellwegbegrenzung 28 weist in etwa die gleiche Breite auf wie der Kolbensteg 10.

Der erste Schubabschnitt 13 des ersten Schleppkolbens 11 weist einen ersten Absatz 36 auf, welcher als axialer Anschlag an der benachbarten ersten Stirnseite der Stellwegbegrenzung 28 dient. Dementsprechend weist der zweite Schubabschnitt 14 des zweiten Schleppkolbens 12 einen zweiten Absatz 37 auf, welcher als axialer Anschlag an der benachbarten zweiten Stirnseite der Stellwegbegrenzung 28 dient. Die beiden Absätze 36, 37 begrenzen zudem jeweils die Eintauchtiefen der Schleppkolben 11, 12 in den Kolbensteg 10. In dem gezeigten Ausführungsbeispiel reichen die Eintauchtiefen jeweils etwa bis zur axialen Mitte des Kolbenstegs 10.

Zudem ist erkennbar, dass der Hauptkolben 2 gemäß Fig. 1 und Fig. 2 im Gegensatz zu dem bekannten Hauptkolben 2.1 gemäß Fig. 4 einen einheitlichen Außendurchmesser beiderseits des Kolbenstegs 10 aufweist. Ebenso weisen beide Schleppkolben 11, 12 hier gleiche Außendurchmesser auf. Dies ist jedoch keine zwingende Voraussetzung für die hier vorgeschlagene Erfindung, sondern lediglich als beispielhaft anzusehen.

Die Funktion einer Kolben-Zylinder-Anordnung 1 gemäß Fig. 1 und Fig. 4 ist wie folgt:
In Fig. 1 befindet sich die Kolben-Zylinder-Anordnung 1 in einer Mittenstellung. Die Mittenstellung wird erreicht und fixiert, wenn am Hauptkolben 2 beidseitig und an den beiden Schleppkolben 11, 12 jeweils einseitig ein gegenüber dem Außendruck erhöhter Fluiddruck anliegt. Die aus der Druckhöhe und den jeweils wirksamen Kolbenflächen resultierenden Stellkräfte sind derart ausgelegt, dass der Hauptkolben 2 aus jeder anderen Position automatisch in die Mittenstellung bewegt wird, wobei jeweils einer der beiden Schleppkolben 11, 12 als aktiver Kolben den Hauptkolben 2 bis zum Anschlag an die Stellwegbegrenzung 28 mitbewegt und dabei in den Kolbensteg 10 axial teilweise eintaucht. Der jeweils andere Schleppkolben 11, 12 fährt bis zum gegenüberliegenden Anschlag an die Stellwegbegrenzung 28 axial heran und taucht dabei von der gegenüberliegenden Seite kommend ebenfalls abschnittweise in den Kolbensteg 10 ein, so dass der Hauptkolben 2 in der Mittenstellung spielfrei fixiert ist und beide Schleppkolben 11, 12 in den Hauptkolbensteg 10 abschnittweise eingefahren sind.

Wird hingegen nur einer der beiden Druckräume 8, 9 mit Druckfluid gefüllt und der andere Druckraum 8, 9 gleichzeitig entlüftet, fährt der Hauptkolben 2 ab seiner Mittenstellung mit veränderter Geschwindigkeit axial weiter in die entsprechende erste oder zweite Endstellung an der ersten oder zweiten Endanschlagsfläche 5, 6, wobei der druckbeaufschlagte Schleppkolben 11, 12 an der Stellwegbegrenzung 28 stehen bleibt und der passive Schleppkolben 11, 12 drucklos bis zum genannten axialen Endanschlag mitgenommen wird.

Fig. 3 zeigt eine zweite Kolben-Zylinder-Anordnung 50 mit den Merkmalen der Erfindung. Diese Kolben-Zylinder-Anordnung 50 weist ebenfalls einen Hauptkolben 51 sowie lediglich einen einzigen Schleppkolben 52 in einer Platz sparenden Anordnung auf. Dazu ist an dem Hauptkolben 51 ein kreisförmiger Kolbensteg 61 ausgebildet, welcher sich an dem Hauptkolben 51 axial endseitig radial erhebt, wobei er bis etwa zur axialen Mitte des Hauptkolbens 51 reicht. An dem Kolbensteg 61 ist eine kreisringförmige axiale Ausnehmung 55 ausgebildet. Der zugeordnete Schleppkolben 52 weist einen Schubabschnitt 54 auf, welcher zur Mitnahme des Hauptkolbens 51 in die Ausnehmung 55 axial teilweise einfährt und an deren Grundfläche anschlägt. Der Hauptkolben 51 ist durch die mit ihm fest verbundene Kolbenstange 19 mittels zweier axial voneinander beabstandeten Gleitlagern 59, 60 in dem Zylindergehäuse 3 axial verschiebbar gelagert und gegenüber dem Zylindergehäuse 3 abgedichtet. Der weitgehend hohlzylindrische Schleppkolben 52 ist auf einer Außenmantelfläche 38 des Hauptkolbens 51 axial verschiebbar geführt und im Stellweg durch eine Stellwegbegrenzung 53 begrenzt, welche als eine nach radial innen weisende Stufe an dem Zylindergehäuse 3 ausgebildet ist. Zur Abdichtung des schleppkolbenseitigen ersten Druckraumes 8 ist eine ringförmige Dichtung 23 radial zwischen dem Hauptkolben 51 und dem Schleppkolben 52 angeordnet. Außerdem ist eine ringförmige Dichtung 25 radial zwischen dem Schleppkolben 52 und einer zugeordneten zylindrischen Innenmantelfläche des Zylindergehäuses 3 angeordnet. Zur Abdichtung des gegenüberliegenden zweiten Druckraumes 9 ist eine ringförmige Dichtung 58 radial zwischen dem Hauptkolben 51 und der Innenmantelfläche des Zylindergehäuses 3 angeordnet.

Zwischen dem Außenmantel des Kolbenstegs 61 und dem Zylindergehäuses 3 verbleibt ein Freiraum 62. Dieser Freiraum 62 kann wie dargestellt dazu genutzt werden, um ein Funktionselement 57 auf einer radialen Auflagefläche 56 am Außenmantel des Kolbenstegs 61 anzuordnen. Dies kann beispielsweise ein Magnet einer Hall-Sensoreinrichtung sein, mittels der eine axiale Positionserfassung des Hauptkolbens 51 beziehungsweise eines mit diesem über die Kolbenstange 19 verbundenen Stellelements ermöglicht wird.

### Bezugszeichenliste (Bestandteil der Beschreibung)

- 1: Kolben-Zylinder-Anordnung (1. Ausführungsform)
- 1.1: Kolben-Zylinder-Anordnung (Stand der Technik)
- 2: Erster Hauptkolben (1. Ausführungsform)
- 2.1: Hauptkolben (Stand der Technik)
- 3: Zylindergehäuse
- 4: Längsachse der Kolben-Zylinder-Anordnung
- 5: Erste Endanschlagfläche
- 6: Zweite Endanschlagfläche
- 7: Kolbenkammer
- 8: Erster Druckraum
- 9: Zweiter Druckraum
- 10: Kolbensteg (1. Ausführungsform)
- 10.1: Kolbensteg (Stand der Technik)
- 11: Erster Schleppkolben (1. Ausführungsform)
- 11.1: Erster Schleppkolben (Stand der Technik)
- 12: Zweiter Schleppkolben (1. Ausführungsform)
- 12.1: Zweiter Schleppkolben (Stand der Technik)
- 13: Erster Schubabschnitt (1. Ausführungsform)
- 13.1: Erster Schubabschnitt (Stand der Technik)
- 14: Zweiter Schubabschnitt (1. Ausführungsform)
- 14.1: Zweiter Schubabschnitt (Stand der Technik)
- 15: Erstes 3/2-Wege-Magnetventil
- 16: Erste pneumatische Verbindungsleitung
- 17: Zweites 3/2-Wege-Magnetventil
- 18: Zweite pneumatische Verbindungsleitung
- 19: Kolbenstange
- 20: Schraubverbindung
- 21: Erstes Dämpfungselement
- 22: Zweites Dämpfungselement
- 23: Erste Dichtung
- 24: Zweite Dichtung
- 25: Dritte Dichtung
- 26: Vierte Dichtung
- 27: Fünfte Dichtung
- 28: Erste Stellwegbegrenzung (1. Ausführungsform)
- 28.1: Stellwegbegrenzung (gemäß Stand der Technik)
- 29: Gleitring
- 30: Erste Ausnehmung (1. Ausführungsform)
- 31: Zweite Ausnehmung (1. Ausführungsform)
- 32: Erstes Schubsegment (1. Ausführungsform)
- 33: Zweites Schubsegment (1. Ausführungsform)
- 34: Erstes Ausnehmungssegment (1. Ausführungsform)
- 35: Zweites Ausnehmungssegment (1. Ausführungsform)
- 36: Absatz am ersten Schleppkolben 11
- 37: Absatz am zweiten Schleppkolben 12
- 38: Außenmantelfläche des Hauptkolbens
- 50: Kolben-Zylinder-Anordnung (2. Ausführungsform)
- 51: Hauptkolben (2. Ausführungsform)
- 52: Schleppkolben (2. Ausführungsform)
- 53: Stellwegbegrenzung (2. Ausführungsform)
- 54: Schubabschnitt (2. Ausführungsform)
- 55: Ausnehmung (2. Ausführungsform)
- 56: Auflagefläche (2. Ausführungsform)
- 57: Funktionselement, Magnet (2. Ausführungsform)
- 58: Dichtung (2. Ausführungsform)
- 59: Erstes Gleitlager für die Kolbenstange 19 (2. Ausführungsform)
- 60: Zweites Gleitlager für die Kolbenstange 19 (2. Ausführungsform)
- 61: Kolbensteg (2. Ausführungsform)
- 62: Freiraum (2. Ausführungsform)

## Patentansprüche

1. Kolben-Zylinder-Anordnung (1, 50) mit einem Zylindergehäuse (3), in dem ein Hauptkolben (2, 51) sowie mindestens ein Schleppkolben (11, 12, 52) jeweils axial verschiebbar aufgenommen sind, wobei der Hauptkolben (2, 51) eine Kolbenkammer (7) des Zylindergehäuses (3) in zwei Druckräume (8, 9) mit veränderlichem Volumen unterteilt, über welche der Hauptkolben (2, 51) beidseitig und der wenigstens eine Schleppkolben (11, 12, 52) einseitig mit einem Druckfluid beaufschlagbar sind, bei welcher der wenigstens eine Schleppkolben (11, 12, 52) axial verschiebbar auf einer zylindrischen Außenmantelfläche (38) des Hauptkolbens (2, 51) geführt ist, welche sich seitlich eines als axiales Widerlager wirksamen kreisförmigen Kolbenstegs (10, 61) erstreckt, bei dem der Kolbensteg (10, 61) sich von der Außenmantelfläche (38) des Hauptkolbens (2, 51) nach radial außen erstreckt, bei welcher der wenigstens eine Schleppkolben (11, 12, 52) an seinem kolbenstegnahen Ende einen Schubabschnitt (13, 14, 54) aufweist, der sich nach axial innen hin zu dem Kolbensteg (10, 61) erstreckt, bei der an dem Zylindergehäuse (3) eine Stellwegbegrenzung (28, 53) zur Begrenzung eines axialen Stellwegs des wenigstens einen Schleppkolbens (11, 12, 52) angeordnet oder ausgebildet ist, und bei welcher der wenigstens eine Schleppkolben (11, 12, 52) bei einer Druckbeaufschlagung den Hauptkolben (2, 51) bis zum Anschlagen des Schleppkolbens (11, 12, 52) an der Stellwegbegrenzung (28, 53) mittels des Schubabschnitts (13, 14, 54) mitschleppt, **dadurch gekennzeichnet, dass** der Kolbensteg (10, 61) des Hauptkolbens (2, 51) eine axiale Ausnehmung (30, 31, 55) aufweist, und dass der Schubabschnitt (13, 14, 54) des wenigstens einen Schleppkolbens (11, 12, 52) an diese Ausnehmung (30, 31, 55) derartig geometrisch angepasst ausgebildet ist, dass der Schubabschnitt (13, 14, 54) beim Anfahren des jeweiligen Schleppkolbens (11, 12, 52) an den Kolbensteg (10, 61) des Hauptkolbens (2, 52) formschlüssig in die Ausnehmung (30, 31, 55) eintauchen kann.

2. Kolben-Zylinder-Anordnung nach Anspruch 1, **dadurch gekennzeichnet, dass** zwei Schleppkolben (11, 12) in dem Zylindergehäuse (3) angeordnet sowie durch einen axial mittig an dem Hauptkolben (2) angeordneten Kolbensteg (10) voneinander getrennt sind, dass ein erster Schleppkolben (11), welcher einen ersten Schubabschnitt (13) aufweist, in einem ersten Druckraum (8) auf der zylindrischen Außenmantelfläche des Hauptkolbens (2) axial beweglich geführt ist, dass ein zweiter Schleppkolben (12), welcher einen zweiten Schubabschnitt (14) aufweist, in einem zweiten Druckraum (9) auf der zylindrischen Außenmantelfläche des Hauptkolbens (2) axial beweglich geführt ist, und dass der Kolbensteg (10) zwei axiale Ausnehmungen (30, 31) aufweist, wobei eine erste Ausnehmung (30) dem ersten Schleppkolben (11) und eine zweite Ausnehmung (31) dem zweiten Schleppkolben (12) zugewandt ist, so dass jeder Schleppkolben (11, 12) beim Anfahren an den Kolbensteg (10) in die zugeordnete Ausnehmung (30, 31) des Kolbenstegs (10) eintauchen kann.

3. Kolben-Zylinder-Anordnung nach Anspruch 1 oder 2, **dadurch gekennzeichnet, dass** die ersten und zweiten Schubabschnitte (13, 14) der beiden Schleppkolben (11, 12) jeweils aus mehreren, in Umfangsrichtung zueinander beabstandeten kreisbogenförmigen ersten und zweiten Schubsegmenten (32, 33) gebildet sind, wobei gegenüberliegende erste und zweite Schubsegmente (32, 33) der Schleppkolben (11, 12) in Umfangsrichtung in Bezug zueinander alternierend angeordnet sind, und dass die ersten und zweiten Ausnehmungen (30, 31) des Kolbenstegs (10) jeweils aus mehreren in Umfangsrichtung zueinander beabstandeten taschenförmigen ersten und zweiten Ausnehmungssegmenten (34, 35) gebildet sind, wobei axial gegenüberliegende erste und zweite Ausnehmungssegmente (34, 35) des Kolbenstegs (10) in Umfangsrichtung zueinander alternierend angeordnet sind, so dass jedem ersten Schubsegment (32) ein erstes Ausnehmungssegment (34) zugeordnet ist und jedem zweiten Schubsegment (33) ein zweites Ausnehmungssegment (35) zugeordnet ist, welche paarweise ineinandergreifen können.

4. Kolben-Zylinder-Anordnung nach einem der Ansprüche 1 bis 3, **dadurch gekennzeichnet, dass** der erste Schubabschnitt (13) des ersten Schleppkolbens (11) einen ersten Absatz (36) aufweist, dass der zweite Schubabschnitt (14) des zweiten Schleppkolbens (12) einen zweiten Absatz (37) aufweist, dass diese Absätze (36, 37) in Umfangsrichtung geschlossen oder unterbrochen ausgebildet sind, wobei der erste Absatz (36) als eine erste axiale Anschlagfläche zur Begrenzung des Stellwegs des ersten Schleppkolbens (11) an der Stellwegbegrenzung (28) in einer ersten Axialrichtung sowie zur gleichzeitigen Begrenzung der Eintauchtiefe in die erste Ausnehmung (30) wirksam ist, und wobei der zweite Absatz (37) als eine zweite axiale Anschlagfläche zur Begrenzung des Stellwegs des zweiten Schleppkolbens (12) an der Stellwegbegrenzung (28) in einer zweiten Axialrichtung sowie zur gleichzeitigen Begrenzung der Eintauchtiefe in die zweite Ausnehmung (31) wirksam ist.

5. Kolben-Zylinder-Anordnung nach einem der Ansprüche 1 bis 4, **dadurch gekennzeichnet, dass** eine Stellwegbegrenzung (28) für jeden Schleppkolben (11, 12) als doppelseitig wirksamer Haltesteg des Zylindergehäuses (3) ausgebildet ist, welcher sich nach radial innen, hin zu dem Kolbensteg (10) erstreckt.

6. Kolben-Zylinder-Anordnung nach einem der Ansprüche 1 bis 4, **dadurch gekennzeichnet, dass** eine Stellwegbegrenzung (53) für jeden Schleppkolben (52) als einseitig wirksame Stufe an dem Zylindergehäuse (3) ausgebildet ist, welche sich nach radial innen, hin zu dem Hauptkolben (51) erstreckt.

7. Kolben-Zylinder-Anordnung nach Anspruch 1, 5 oder 6, **dadurch gekennzeichnet, dass** lediglich ein Schleppkolben (52) vorhanden ist, welcher einen Schubabschnitt (54) aufweist sowie auf einem Hauptkolben (51) geführt ist, dass dieser Hauptkolben (51) einen sich radial erstreckenden Kolbensteg (61) aufweist, welcher mindestens eine axiale Ausnehmung (55) aufweist, und dass der Kolbensteg (61) axial endseitig an dem Hauptkolben (51) ausgebildet ist.

8. Kolben-Zylinder-Anordnung nach Anspruch 7, **dadurch gekennzeichnet, dass** sich der Kolbensteg (61) zumindest bis in die axiale Mitte des Hauptkolbens (51) erstreckt, und dass die Außenmantelfläche des Kolbenstegs (61) eine Auflagefläche (56) zur Anbringung eines Funktionselements (57) einer Positionserfassungsvorrichtung bildet.

9. Kolben-Zylinder-Anordnung nach Anspruch 7, **dadurch gekennzeichnet, dass** sich der Kolbensteg (61) zumindest bis in die axiale Mitte des Hauptkolbens (51) erstreckt, und dass die Außenmantelfläche des Kolbenstegs (61) eine Auflagefläche (56) zur Anbringung eines Funktionselements (57) einer Positionsverriegelungsvorrichtung bildet.

10. Automatisiertes Schaltgetriebe eines Fahrzeugs, beispielsweise eines Nutzfahrzeugs, mit einer Kolben-Zylinder-Anordnung (1, 50), welche als ein Dreistellungsaktuator ausgebildet ist und als ein Getriebesteller des Schaltgetriebes dient, wobei die Kolben-Zylinder-Anordnung (1, 50) die Merkmale von wenigstens einem der Ansprüche 1 bis 9 aufweist.

## Claims

1. A piston-cylinder assembly (1, 50) comprising a cylindrical housing (3) in which a main piston (2, 51) and at least one trailing piston (11, 12, 52) are each disposed in an axially displaceable manner, wherein the main piston (2, 51) divides a piston chamber (7) of the cylindrical housing (3) into two pressure chambers (8, 9) with a variable volume, via which the main piston (2, 51) on both sides and the at least one trailing piston (11, 12, 52) on one side can be acted upon with a pressurized fluid, the at least one trailing piston (11, 12, 52) being guided in an axially displaceable manner on a cylindrical outer lateral face (38) of the main piston (2, 51), which extends to the side of a circular piston web (10, 61) acting as an axial counter bearing, the piston web (10, 61) extending radially outward from an outer lateral face (38) of the main piston (2, 51), the at least one trailing piston (11, 12, 52) having a thrust portion (13, 14, 54) at an end proximate to the piston web (10, 61), the thrust portion extending axially inward toward the piston web (10, 61), wherein a travel limiter (28, 53) for limiting an axial travel range of the at least one trailing piston (11, 12, 52) is arranged or configured on the cylinder housing (3), wherein, under pressure, the at least one trailing piston (11, 12, 52) follows the main piston (2, 51) via the thrust portion (13, 14, 54) until the trailing piston (11, 12, 52) hits the travel limiter (28, 53), **characterized in that** the piston web (10, 61) of the main piston (2, 51) has an axial recess (30, 31, 55), and **in that** the thrust portion (13, 14, 54) of the at least one trailing piston (11, 12, 52) is geometrically adapted to the axial recess (30, 31, 55) to be insertable into the recess (30, 31, 55) with a positive lock when the respective trailing piston (11, 12, 52) approaches the piston web (10, 61) of the main piston (2, 52).

2. The piston-cylinder assembly according to claim 1, **characterized in that** two trailing pistons (11, 12) are arranged in the cylindrical housing (3) and separated from one another by a piston web (10), which is axially centrally arranged on the main piston (2), **in that** a first trailing piston (11) of the two trailing pistons, which has a first thrust portion (13), is guided in an axially movable manner in a first pressure chamber (8) on the cylindrical outer lateral face of the main piston (2), **in that** a second trailing piston (12) of the two trailing pistons, which has a second thrust portion (14), is guided in an axially movable manner in a second pressure chamber (9) on the cylindrical outer lateral face of the main piston (2), and **in that** the piston web (10) has two axial recesses (30, 31), a first recess (30) facing the first trailing piston (11), and a second recess (31) facing the second trailing piston (12) so that each trailing piston (11, 12) is insertable into an associated recess (30, 31) of the piston web (10) when approaching the piston web (10) .

3. The piston-cylinder assembly according to claim 1 or 2, **characterized in that** the first and second thrust portions (13, 14) of the two trailing pistons (11, 12) are each formed from a plurality of arcuate first and second thrust segments (32, 33) circumferentially spaced from one another, wherein first and second thrust segments (32, 33) of the trailing pistons (11, 12) are arranged radially opposite from each other so as to circumferentially alternate with one another, and **in that** the first and second recesses (30, 31) of the piston web (10) are each formed from a plurality of pocket-shaped first and second recess segments (34, 35) which are circumferentially spaced from one another, axially opposing first and second recess segments (34, 35) of the piston web (10) so that each of the first recess segments (34) is assigned to a respective one of the first thrust segments (32), and each of the second recess segments (35) is assigned to a respective one of the second thrust segments (33) for engaging one another in pairs.

4. The piston-cylinder assembly according to any of claims 1 to 3, **characterized in that** the first thrust portion (13) of the first trailing piston (11) has a first shoulder (36), **in that** the second thrust portion (14) of the second trailing piston (12) has a second shoulder (37), **in that** the first and second shoulders (36, 37) are circumferentially closed or non-continuous, the first shoulder (36) acting as a first axial stop surface for limiting the travel range of the first trailing piston (11) on the travel limiter (28) in a first axial direction and simultaneously limiting an insertion depth into the first recess (30), and the second shoulder (37) acting as a second axial stop surface for limiting the travel range of the second trailing piston (12) on the travel limiter (28) in a second axial direction and simultaneously limiting an insertion depth into the second recess (31).

5. The piston-cylinder assembly according to any of claims 1 to 4, **characterized in that** a respective travel limiter (28) for each of the at least one trailing piston (11, 12) is double-sided retaining web of the cylindrical housing (3) which extends radially inward toward the piston web (10).

6. The piston-cylinder assembly according to any of claims 1 to 4, **characterized in that** a respective travel limiter (53) for each trailing piston (52) is configured as a single-sided step on the cylindrical housing (3) which extends radially inward toward the main piston (51).

7. The piston-cylinder assembly according to claim 1, 5 or 6, **characterized in that** only one trailing piston (52) is present, having a thrust portion (54) and being guided on a main piston (51), **in that** this main piston (51) has a radially extending piston web (61), which has at least one axial recess (55), and **in that** the piston web (61) is formed on the main piston (51) on its axial end side.

8. The piston-cylinder assembly according to claim 7, **characterized in that** the piston web (61) extends into the axial center of the main piston (51), and **in that** an outer lateral face of the piston web (61) forms a bearing surface (56) for attaching a functional element (57) of a position detection device.

9. The piston-cylinder assembly according to claim 7, **characterized in that** the piston web (61) extends at least as far as the axial center of the main piston (51), and **in that** an outer lateral face of the piston web (61) forms a bearing surface (56) for attaching a functional element (57) of a position locking device.

10. An automatic transmission of a vehicle, for example of a commercial vehicle, comprising a piston-cylinder assembly (1, 50), which is configured as a three-position actuator and serving as a transmission actuator of the automatic transmission, wherein the piston-cylinder assembly (1, 50) has the features of at least one of claims 1 to 9.

## Revendications

1. Agencement piston-cylindre (1, 50) avec un carter de cylindre (3) dans lequel un piston principal (2, 51) ainsi qu'au moins un piston de réaction (11, 12, 52) sont respectivement reçus de façon axialement déplaçable, dans lequel le piston principal (2, 51) subdivise une chambre de piston (7) du carter de cylindre (3) en deux chambres de pression (8, 9) avec des volumes variables, via laquelle le piston principal (2, 51) sur les deux côtés et le au moins un piston de réaction (11, 12, 52) sur un côté peuvent être sollicités avec un fluide de pression, par laquelle le au moins un piston de réaction (11, 12, 52) est guidé de façon axialement déplaçable sur une surface latérale extérieure (38) cylindrique du piston principal (2, 51), laquelle s'étend latéralement par rapport à un listel de piston (10, 61) circulaire qui agit en tant que butée axiale, par lequel le listel de piston (10, 61) s'étend radialement vers l'extérieur depuis la surface latérale extérieure (38) du piston principal (2, 51), par laquelle le au moins un piston de réaction (11, 12, 52) présente contre son extrémité proche du listel de piston une section de poussée (13, 14, 54), qui s'étend axialement vers l'intérieur en allant vers le listel de piston (10, 61), par laquelle une limitation de course de réglage (28, 53) pour limiter une course de réglage axiale du au moins un piston de réaction (11, 12, 52) est agencée ou conçue contre le carter de cylindre (3), et par laquelle le au moins un piston de réaction (11, 12, 52), lors d'une sollicitation par pression, traîne avec lui le piston principal (2, 51) jusqu'à faire buter le piston de réaction (11, 12, 52) contre la limitation de course de réglage (28, 53) au moyen de la section de poussée (13, 14, 54), **caractérisé en ce que** le listel de piston (10, 61) du piston principal (2, 51) présente un évidement (30, 31, 55) axial, et **en ce que** la section de poussée (13, 14, 54) du au moins un piston de réaction (11, 12, 52) est conçue contre cet évidement (30, 31, 55) de façon géométriquement ajustée de sorte que la section de poussée (13, 14, 54) puisse plonger par liaison de forme dans l'évidement (30, 31, 55) lors du démarrage du piston de réaction (11, 12, 52) respectif contre le listel de piston (10, 61) du piston principal (2, 52).

2. Agencement piston-cylindre selon la revendication 1, **caractérisé en ce que** deux pistons de réaction (11, 12) sont agencés dans le carter de cylindre (3), ainsi que séparés l'un de l'autre par un listel de piston (10) agencé de façon axialement centrée contre le piston principal (2), **en ce qu'**un premier piston de réaction (11), lequel présente une première section de poussée (13), est guidé de façon axialement déplaçable dans une première chambre de pression (8) sur la surface latérale extérieure cylindrique du piston principal (2), **en ce qu'**un second piston de réaction (12), lequel présente une seconde section de poussée (14), est guidé de façon axialement déplaçable dans une seconde chambre de pression (9) sur la surface latérale extérieure cylindrique du piston principal (2), et **en ce que** le listel de piston (10) présente deux évidements (30, 31) axiaux, dans lequel un premier évidement (30) est tourné vers le premier piston de réaction (11) et un second évidement (31) est tourné vers le second piston de réaction (12), de sorte que chaque piston de réaction (11, 12) puisse plonger dans l'évidement (30, 31) attribué du listel de piston (10) lors du démarrage contre le listel de piston (10).

3. Agencement piston-cylindre selon la revendication 1 ou 2, **caractérisé en ce que** les première et seconde sections de poussée (13, 14) des deux pistons de réaction (11, 12) sont respectivement formées de plusieurs premier et second segments de poussée (32, 33) en arc de cercle et distancés l'un de l'autre dans la direction circonférentielle, dans lequel des premier et second segments de poussée (32, 33) opposés l'un à l'autre des pistons de réaction (11, 12) sont agencés en alternance l'un par rapport à l'autre dans la direction circonférentielle, et **en ce que** les premier et second évidements (30, 31) du listel de piston (10) sont respectivement formés de plusieurs premier et second segments d'évidement (34, 35) en forme de poche et distancés l'un de l'autre dans la direction circonférentielle, dans lequel des premier et second segments d'évidement (34, 35) opposés l'un à l'autre du listel de piston (10) sont agencés en alternance l'un par rapport à l'autre dans la direction circonférentielle, de sorte qu'à chaque premier segment de poussée (32) soit attribué un premier segment d'évidement (34) et à chaque second segment de poussée (33) soit attribué un second segment d'évidement (35), lesquels peuvent s'imbriquer l'un dans l'autre par paire.

4. Agencement piston-cylindre selon l'une des revendications 1 à 3, **caractérisé en ce que** la première section de poussée (13) du premier piston de réaction (11) présente un premier épaulement (36), **en ce que** la seconde section de poussée (14) du second piston de réaction (12) présente un second épaulement (37), **en ce que** ces épaulements (36, 37) sont conçus de façon fermée ou interrompue dans la direction circonférentielle, dans lequel le premier épaulement (36) est actif en tant que première surface de butée axiale pour limiter la course de réglage du premier piston de réaction (11) contre la limitation de course de réglage (28) dans une première direction axiale ainsi que pour limiter simultanément la profondeur de plongée dans le premier évidement (30), et dans lequel le second épaulement (37) est actif en tant que seconde surface de butée axiale pour limiter la course de réglage du second piston de réaction (12) contre la limitation de course de réglage (28) dans une seconde direction axiale ainsi que pour limiter simultanément la profondeur de plongée dans le second évidement (31).

5. Agencement piston-cylindre selon l'une des revendications 1 à 4, **caractérisé en ce qu'**une limitation de course de réglage (28) pour chaque piston de réaction (11, 12) est conçue en tant que traverse de retenue, qui agit sur les deux côtés, du carter de cylindre (3), laquelle s'étend radialement vers l'intérieur en allant vers le listel de piston (10).

6. Agencement piston-cylindre selon l'une des revendications 1 à 4, **caractérisé en ce qu'**une limitation de course de réglage (53) pour chaque piston de réaction (52) est conçue contre le carter de cylindre (3) en tant que niveau qui agit sur un côté, laquelle s'étend radialement vers l'intérieur en allant vers le piston principal (51).

7. Agencement piston-cylindre selon la revendication 1, 5 ou 6, **caractérisé en ce que** seulement un piston de réaction (52) est disponible, lequel présente une section de poussée (54) et est guidé sur un piston principal (51), **en ce que** ce piston principal (51) présente un listel de piston (61) qui s'étend radialement, lequel présente au moins un évidement (55) axial, et **en ce que** le listel de piston (61) est conçu contre le piston principal (51), axialement sur le côté d'extrémité.

8. Agencement piston-cylindre selon la revendication 7, **caractérisé en ce que** le listel de piston (61) s'étend au moins jusqu'au milieu axial du piston principal (51), et **en ce que** la surface latérale extérieure du listel de piston (61) forme une surface d'appui (56) pour l'apposition d'un élément fonctionnel (57) d'un dispositif de saisie de position.

9. Agencement piston-cylindre selon la revendication 7, **caractérisé en ce que** le listel de piston (61) s'étend au moins jusqu'au milieu axial du piston principal (51), et **en ce que** la surface latérale extérieure du listel de piston (61) forme une surface d'appui (56) pour l'apposition d'un élément fonctionnel (57) d'un dispositif de verrouillage de position.

10. Boîte de vitesse automatique d'un véhicule, par exemple d'un véhicule utilitaire, avec un agencement piston-cylindre (1, 50), lequel est conçu en tant qu'actionneur à trois positions, et sert d'organe de réglage de vitesse de la boîte de vitesse, dans lequel l'agencement piston-cylindre (1, 50) présente les caractéristiques d'au moins l'une des revendications 1 à 9.
